## Europäisches Patentamt

(19) **European Patent Office**

**Office européen des brevets**

(11) Veröffentlichungsnummer: **0 120 998**

**B1**

(12) # EUROPÄISCHE PATENTSCHRIFT

(45) Veröffentlichungstag der Patentschrift:
18.03.87

(51) Int. Cl.⁴: **G 02 F 1/133**

(21) Anmeldenummer: **83112876.4**

(22) Anmeldetag: **21.12.83**

(54) **Anzeigevorrichtung.**

(30) Priorität: **02.03.83 DE 3307333**

(43) Veröffentlichungstag der Anmeldung:
**10.10.84 Patentblatt 84/41**

(45) Bekanntmachung des Hinweises auf die Patenterteilung:
**18.03.87 Patentblatt 87/12**

(84) Benannte Vertragsstaaten:
**FR GB IT SE**

(56) Entgegenhaltungen:
**DE-A-2 738 305**
**DE-B-2 805 970**
**US-A-4 256 382**

(73) Patentinhaber: **VDO Adolf Schindling AG,
Gräfstrasse 103, D-6000 Frankfurt/Main (DE)**

(72) Erfinder: **Baeger, Holm, Dr., Salzbornstrasse 1,
D-6231 Schwalbach (DE)**
Erfinder: **Preiss, Bernd, Danzigerstrasse 15, D-6238
Hofheim (DE)**

(74) Vertreter: **Könekamp, Herbert, Dipl.- Ing., Sodener
Strasse 9, D-6231 Schwalbach (DE)**

LIBER, STOCKHOLM 1987

**Beschreibung**

Die Erfindung betrifft eine Anzeigevorrichtung, insbesondere Flüssigkristallanzeige, mit einem zwischen zwei optisch verschiedenen Zuständen schaltbaren fließfähigen Medium, das einen zwischen zwei zueinander parallelen transparenten Trägerplatten gebildeten Zellenraum ausfüllt, wobei die Trägerplatten über eine Vielzahl von Distanzelementen bestimmter Größe in einem vorgegebenen Abstand voneinander gehalten sind und mit sich gegenüberliegend jeweils einer elektrisch leitfähigen Schicht versehen sind, wobei eine der Trägerplatten im Zellenraum eine von einer elektrisch leitfähigen Schicht freie Fläche aufweist.

Bei bekannten Anzeigevorrichtungen sind die Distanzelemente im wesentlichen gleichmäßig über die gesamte Fläche der Trägerplatten verteilt angeordnet. Sie dienen dazu, die Trägerplatten auf einem bestimmten Abstand voneinander zu halten, da bei einer Verringerung dieses Abstandes die Funktionsfähigkeit der Anzeigevorrichtung negativ beeinflußt wird. Wird nun eine derartige Anzeigevorrichtung, die eine Flüssigkristallanzeige sein kann, sehr tiefen Temperaturen ausgesetzt, so kommt es zu einer Kontraktion des zwischen zwei optisch verschiedenen Zuständen schaltbaren Mediums, z. B. einer Flüssigkristallsubstanz.

Da durch die Distanzelemente die Trägerplatten auf ihrem vorgegebenen Abstand zueinander gehalten werden, bleibt das Volumen des Zellenraumes gleich, während sich aber das Volumen der Flüssigkristallsubstanz reduziert. Dies führt zu einer Bildung von Vakuumblasen an nicht vorherbestimmbaren Stellen in dem Zellenraum. Befindet sich dabei die Vakuumblase an einer Stelle, an der sich elektrisch leitfähige Schichten gegenüberliegen, durch deren Ansteuerung die Flüssigkristallsubstanz zur Darstellung von Anzeigesymbolen umschaltbar ist, so ist aufgrund der dort nicht mehr vorhandenen Flüssigkristallsubstanz keine Darstellung der Anzeigesymbole möglich. Die Anzeige fällt aus.

Zwar lösen sich die Vakuumblasen wieder auf, wenn die Flüssigkristallsubstanz sich wieder auf Plustemperaturen erwärmt hat. Dies ist aber für verschiedene Anwendungsfälle derartiger Anzeigevorrichtungen nicht hilfreich. Sind solche Anzeigevorrichtungen z. B. im Armaturenbrett von Kraftfahrzeugen eingebaut, so fallen sie insbesondere in Gegenden mit tiefen Wintertemperaturen während des gesamten Winterhalbjahres aus. Anzeigen in Kraftfahrzeugen müssen bei Temperaturen von -40° bis +80° funktionsfähig sein.

Aus der US-A-4 256 382 ist eine Flüssigkristall-Anzeigevorrichtung bekannt, bei der im Zellenraum eine Membran angeordnet ist, die an beiden Trägerplatten anliegt und mehrere Rippen und mit Flüssigkristallsubstanz gefüllte Kammern bildende Aussparungen aufweist. Die Membran wirkt dabei als Distanzelement.

Aufgabe der Erfindung ist es, eine Anzeigevorrichtung nach dem Oberbegriff zu schaffen, deren Funktionsfähigkeit insbesondere auch bei tiefen Temperaturen gewährleistet ist.

Diese Aufgabe wird erfindungsgemäß dadurch gelöst, daß die von einer leitfähigen Schicht freie Fläche einen von den Distanzelementen bestimmter Größe freien Bereich solcher Ausdehnung aufweist, daß die Trägerplatten bei Abkühlung des Zellenraums in diesem Bereich durch entstehenden Unterdruck aufeinander zu bewegbar sind, wobei das Volumen des Zellenraums entsprechend der temperaturabhängigen Volumenänderung des ihn ausfüllenden Mediums änderbar ist. Durch diese Ausbildung können sich keine Vakuumblasen mehr bilden, da sich das Volumen des Zellenraumes dem Volumen des zwischen zwei optisch verschiedenen Zuständen schaltbaren Mediums anpassen kann. Tiefe Temperaturen führen somit nicht mehr zu einem Ausfall der Anzeigevorrichtung.

Die Trägerplatten können sich an definierten Stellen, an denen keine Beeinflussung der Ablesbarkeit der Anzeigevorrichtung möglich ist, zueinander bewegen und eine Volumenanpassung des Zellenraumes an das Medium durchführen. Vorzugsweise wählt man dazu Stellen, an denen sich auf den Trägerplatten Aufdrucke von Skalierungen oder Beschriftungen befinden. Ein Ausfall aufgrund von Vakuumblasenbildung bei tiefen Temperaturen ist sicher vermieden.

Um eine zu große Durchwölbung an bestimmten Stellen des Bereichs, an dem die Trägerplatten 'atmen' können, zu vermeiden, können in dem von den Distanzelementen bestimmter Größe freien Bereich der Trägerplatte Abstandshalter geringerer Größe als der der Distanzelemente angeordnet sein.

Zu dem gleichen Zweck ist es möglich, daß von Distanzelementen freie Bereiche großer Längen- und Breitenausdehnung durch mit Distanzelementen versehene Segmente in Teilbereiche unterteilt sind.

Um eine Beeinflussung der Funktion der Anzeigevorrichtung sicher zu vermeiden, beträgt der Anteil des von Distanzelementen freien Bereichs an der Gesamtfläche des Zellenraumes bis maximal 50 % vorzugsweise aber etwa 25 %.

Zur Sicherung der Distanzelemente an den jeweils vorgegebenen Stellen, können die Distanzelemente und Abstandshalter durch eine auf die Trägerplatte aufgebrachte Fixierschicht fixiert sein. Dies erfolgt auf einfache Weise dadurch, daß die Fixierschicht in einem Druckverfahren auf die Trägerplatte aufgebracht ist.

Bestehen die Distanzelemente und/oder die Abstandhalter aus Glas, so erfolgt praktisch keine sichtbare Beeinflussung der optischen Eigenschaften der Anzeigevorrichtung.

Als optisch umschaltbares Medium ist vorzugsweise eine Flüssigkristallsubstanz verwendbar.

Ein Ausführungsbeispiel der Erfindung ist in der Zeichnung dargestellt und wird im folgenden näher beschrieben.

Es zeigen

Figur 1 eine Anzeigevorrichtung in der Draufsicht

Figur 2 die Anzeigevorrichtung nach Figur 1 im Querschnitt entlang der Linie II - II in Figur 1

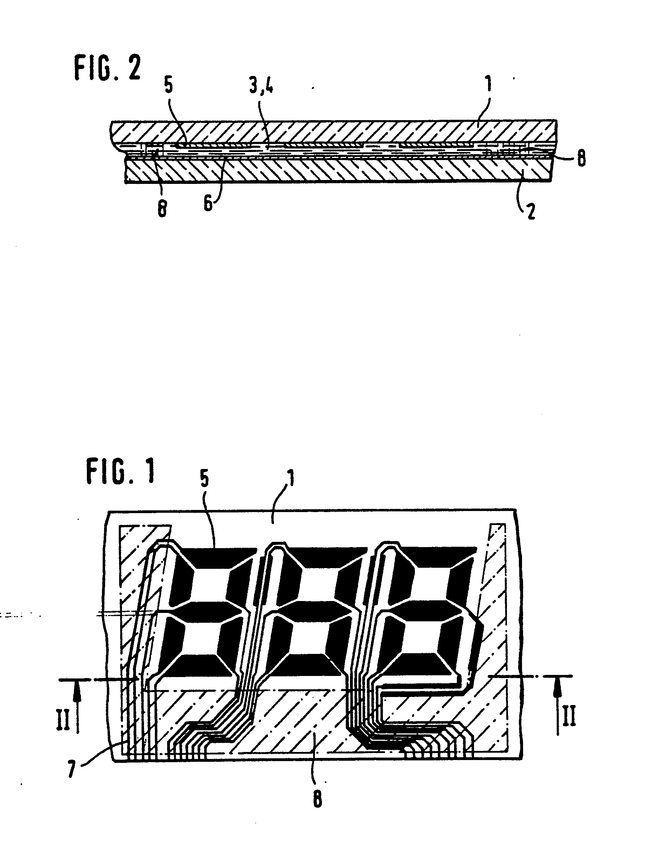

Die in den Figuren dargestellte Anzeigevorrichtung ist eine Flüssigkristallanzeige mit einer vorderen transparenten Trägerplatte 1 und einer hinteren transparenten Trägerplatte 2. Beide Trägerplatten 1 und 2 sind parallel in einem bestimmten Abstand zueinander angeordnet und bilden zwischen sich einen Zellenraum 3 der mit einem zwischen zwei optisch verschiedenen Zuständen schaltbaren Medium 4 eine Flüssigkristallsubstanz ausgefüllt ist. Die hintere Trägerplatte 2 ist mit einer deren gesamte Fläche überdeckenden elektrisch leitfähigen Schicht 6 versehen, während die vordere Trägerplatte 1 entsprechend dem in Figur 1 erkennbaren Muster mit einer elektrisch leitfähigen Schicht aus drei Siebensegment-Elektroden 5 versehen ist.

Über Anschlußelektroden 7 sind die elektrisch leitfähige Schicht 6 sowie die Siebensegment-Elektroden 5 zur optischen Umschaltung des Mediums 4 ansteuerbar.

Mit Ausnahme des schraffierten Bereichs 8 sind zwischen den Trägerplatten 1 und 2 eine Vielzahl nicht dargestellter Distanzelemente bestimmter Größe gleichmäßig verteilt angeordnet, um die beiden Trägerplatten 1 und 2 in einem vorgegebenen Abstand voneinander zu halten.

Der Bereich 8 besitzt eine derartige Größe und Ausdehnung, daß sich in diesem Bereich 8 die Trägerplatten zueinander bewegen können, wenn es in dem Zellenraum 3 zu einer Kontraktion des Mediums 4 aufgrund tiefer Temperaturen kommt. Gleichzeitig bleiben die Trägerplatten 1 und 2 außerhalb des Bereichs 8 durch die Distanzelemente auf dem bestimmten vorgegebenen Abstand gehalten, so daß es zu keiner Beeinträchtigung der Funktionsfähigkeit der Anzeigevorrichtung kommt.

**Patentansprüche**

1. Anzeigevorrichtung, insbesondere Flüssigkristallanzeige, mit einem zwischen zwei optisch verschiedenen Zuständen schaltbaren fließfähigen Medium, das einen zwischen zwei zueinander parallelen transparenten Trägerplatten gebildeten Zellenraum ausfüllt, wobei die Trägerplatten über eine Vielzahl von Distanzelementen bestimmter Größe in einem vorgegebenen Abstand voneinander gehalten sind und mit sich gegenüberliegend jeweils einer elektrisch leitfähigen Schicht versehen sind, wobei eine der Trägerplatten im Zellenraum eine von einer elektrisch leitfähigen Schicht freie Fläche aufweist, dadurch gekennzeichnet, daß die von einer leitfähigen Schicht freie Fläche einen von den Distanzelementen bestimmter Größe freien Bereich (8) solcher Ausdehnung aufweist, daß die Trägerplatten (1 und 2) bei Abkühlung des Zellenraums (3) in diesem Bereich durch entstehenden Unterdruck aufeinander zu bewegbar sind, wobei das Volumen des Zellenraums (3) entsprechend der temperaturabhängigen Volumenänderung des ihn ausfüllenden Mediums (4) änderbar ist.

2. Anzeigevorrichtung nach Anspruch 1, dadurch gekennzeichnet, daß in dem von den Distanzelementen bestimmter Größe freien Bereich (8) der Trägerplatte (1 bzw. 2) Abstandshalter geringerer Größe als der der Distanzelemente angeordnet sind.

3. Anzeigevorrichtung nach Anspruch 1, dadurch gekennzeichnet, daß zwischen von Distanzelementen freien Bereichen (8) mit Distanzelementen versehene Segmente angeordnet sind.

4. Anzeigevorrichtung nach Anspruch 1, dadurch gekennzeichnet, daß der Anteil des von Distanzelementen freien Bereichs (8) an der Gesamtfläche des Zellenraumes (3) bis maximal 50 % beträgt.

5. Anzeigevorrichtung nach Anspruch 4, dadurch gekennzeichnet, daß der Anteil des von Distanzelementen freien Bereichs (8) an der Gesamtfläche des Zellenraumes (3) etwa 25 % beträgt.

6. Anzeigevorrichtung nach einem der vorhergehenden Ansprüche, dadurch gekennzeichnet, daß die Distanzelemente und Abstandshalter durch eine auf die Trägerplatte (1 bzw. 2) aufgebrachte Fixierschicht fixiert sind.

7. Anzeigevorrichtung nach Anspruch 6, dadurch gekennzeichnet, daß die Fixierschicht in einem Druckverfahren auf die Trägerplatte (1 bzw. 2) aufgebracht ist.

8. Anzeigevorrichtung nach einem der vorhergehenden Ansprüche, dadurch gekennzeichnet, daß die Distanzelemente und/oder die Abstandshalter aus Glas bestehen.

9. Anzeigevorrichtung nach einem der vorhergehenden Ansprüche, dadurch gekennzeichnet, daß das optisch umschaltbare Medium (4) eine Flüssigkristallsubstanz ist.

**Claims**

1. Display device, especially a liquid-crystal display, with a fluid medium which is adapted to be changed-over between two optically different states and which fills a cell space formed between two transparent support plates situated parallel to one another, the support plates being held at a predetermined spacing from one another by a plurality of spacer elements of specific size and being each provided with an electrically conductive layer which layers are situated opposite one another, one of the support plates comprising in the cell space a surface free from an electrically conductive layer, characterised in that the surface free of a conductive layer has a region (8) free of the specific-size spacer elements which is of such an extent that, when the cell space (3) cools, the support plates (1 and 2) are movable towards one another in this region by the negative pressure which occurs, the volume of the cell space (3) being variable in accordance with the temperature-dependent volume variation of the medium (4) filling said space.

2. Display device according to claim 1, characterised in that in that region (8) of the support plate (1 or 2) which is free of the spacer elements of specific size there are arranged distance-maintaining elements of smaller size than that of the spacer elements.

3. Display device according to claim 1, characterised in that segments provided with spacer elements are situated between regions (8) free of spacer elements.

4. Display device according to claim 1, characterised in that the proportion of the total area of the cell space (3) represented by the region (8) free of spacer elements amounts to at the most 50 %.

5. Display device according to claim 4, characterised in that the proportion of the total area of the cell space (3) represented by the region (8) free of spacer elements amounts to approximately 25 %.

6. Display device according to one of the preceding claims, characterised in that the spacer elements and distance-maintaining elements are fixed by a fixing layer which is arranged on the support plate (1 or 2).

7. Display device according to claim 6, characterised in that the fixing layer is arranged on the support plate (1 or 2) in a printing process.

8. Display device according to one of the preceding claims, characterised in that the spacer elements and/or the distance-maintaining elements are made of glass.

9. Display device according to one of the preceding claims, characterised in that the medium (4) which can be optically switched or changed-over is a liquid-crystal substance.

**Revendications**

1. Dispositif d'affichage, notamment dispositif d'affichage à cristaux liquides, comportant un milieu fluide qui peut basculer entre deux états optiquement différents et qui remplit l'intérieur d'une cellule formée entre deux plaquettes transparentes de support, parallèles, ces plaquettes étant maintenues à une distance prédéterminée l'une de l'autre par un certain nombre d'entretoises de grosseur déterminée, et portant chacune une couche électriquement conductrice, ces couches se faisant vis-à-vis, et l'une des plaquettes comportant à l'intérieur de la cellule une surface exempte de couche conductrice, dispositif caractérisé en ce qu'une zone (8) de la surface exempte de couche conductrice, qui ne comporte pas d'entretoise de grosseur déterminée, a l'étendue voulue pour que les plaquettes (1, 2) de support se rapprochent dans cette zone quand l'intérieur de la cellule (3) se refroidit, sous l'effet de la dépression qui en resulte, le volume intérieur de cette cellule (3) pouvant varier conformément à la variation de volume, fonction de la température, du milieu (4) qui la remplit.

2. Dispositif d'affichage selon la revendication 1, caractérisé en ce que des tasseaux moins gros que les entretoises sont disposés dans la zone (8) des plaquettes (1, 2) de support qui ne comporte pas d'entretoise de grosseur déterminée.

3. Dispositif d'affichage selon la revendication 1, caractérisé en ce que des segments munis d'entretoises sont disposés entre les zones (8) exemptes d'entretoises de grosseur prédéterminée.

4. Dispositif d'affichage selon la revendication 1, caractérisé en ce que le rapport de la zone (8) exempte d'entretoise à la surface intérieure totale de la cellule (3) est au plus égal à 50 %.

5. Dispositif d'affichage selon la revendication 4, caractérisé en ce que le rapport de la zone (8) exempte d'entretoise à la surface intérieure totale de la cellule (3) est égal à environ 25 %.

6. Dispositif d'affichage selon l'une quelconque des revendications précédentes, caractérisé en ce que les entretoises et les tasseaux sont maintenus par une couche de fixation appliquée sur les plaquettes (1, 2) de support.

7. Dispositif d'affichage selon la revendication 6, caractérisé en ce que la couche de fixation est appliquée par impression sur les plaquettes (1, 2) de support.

8. Dispositif d'affichage selon l'une quelconque des revendications précédentes, caractérisé en ce que les entretoises et/ou les tasseaux sont en verre.

9. Dispositif d'affichage selon l'une quelconque des revendications précédentes, caractérisé en ce que le milieu (4) pouvant basculer optiquement est une substance à cristaux liquides.

FIG. 2

FIG. 1